# EUROPÄISCHE PATENTANMELDUNG

(11) **EP 3 311 954 A1**
(43) Veröffentlichungstag der Anmeldung: **25.04.2018**
(21) Anmeldenummer: 17197038.7
(22) Anmeldetag: 18.10.2017
(51) Int. Cl.: B23Q 11/10

(54) **VERFAHREN UND ANORDNUNG ZUR ZUFUHR EINES KÜHLFLUIDS HIN ZU EINER BEARBEITUNGSSTELLE EINES METALLISCHEN WERKSTÜCKS**

(30) Priorität: 18.10.2016 DE 102016119852
(71) Anmelder: Rheinisch-Westfälische Technische Hochschule (RWTH) Aachen, 52062 Aachen (DE)
(72) Erfinder: Cayli, Tolga, 47798 Krefeld (DE); Klocke, Prof. Dr. Fritz, 52076 Aachen (DE); Döbbeler, Dr. Ing. Benjamin, 52066 Aachen (DE); Pusavec, Franci, 4290 Trzic (SI); Bernstorff, Olaf, 58455 Witten (DE)
(74) Vertreter: Rössler, Matthias

(57) **Zusammenfassung**

Die Erfindung betrifft ein Verfahren und eine Anordnung zur Zufuhr eines Kühlfluids (1) hin zu einer Bearbeitungsstelle (2) eines metallischen Werkstücks (3). Das Verfahren umfasst zumindest folgende Schritte:
a) Bereitstellen des Kühlfluids (1),
b) Bilden eines Spans (4) an der Bearbeitungsstelle (2),
c) Zuführen des Kühlfluids (1) zu der Bearbeitungsstelle (2) als mindestens ein Kühlfluidstrahl (5), wobei der Kühlfluidstrahl (5) mindestens eine Düse (6) zumindest zeitweise mit einem Druck von mehr als 6 bar verlässt und wobei der Kühlfluidstrahl (5) während des Zuführens pulsiert.

## Beschreibung

Die Erfindung betrifft ein Verfahren und eine Anordnung zur Zufuhr eines Kühlfluids hin zu einer Bearbeitungsstelle eines metallischen Werkstücks.

Bei der Bearbeitung von schwer zerspanbaren Werkstoffen, wie etwa Titan- oder Nickelbasislegierungen oder austenitischen Stählen, können Kühlschmierstoffe eingesetzt werden. Die Zufuhr des Kühlschmierstoffs hin zu einer Bearbeitungsstelle, insbesondere Zerspanstelle eines spanend zu bearbeitenden Werkstücks, kann in verschiedener Art und Weise erfolgen. Als konventionelle Kühlschmierstoff-Zufuhr ist die Überflutungskühlung bekannt, die bis heute die meistverwendete Kühlschmierstoff-Zufuhrstrategie ist. Hierbei wird die Zerspanstelle mit Kühlschmierstoff überflutet, wobei der Kühlschmierstoff während des Zuführens mit einem vergleichsweise geringen Druck kontinuierlich aus einer Düse ausgetragen wird. Nachteile der konventionellen Überflutungskühlung sind die undefinierte und unkontrollierte Überflutung der Bearbeitungsstelle, die ungerichtete Zuführung des Kühlschmierstoffs und die ausschließliche Kühlschmierstoff-Zufuhr auf die Spanoberseite. Daher führt der Einsatz der konventionellen Überflutungskühlung regelmäßig zu vergleichsweise hohem Werkzeugverschleiß und häufig zur Bildung von Band- und/oder Wirrspänen, die sich um den Werkzeughalter und das Bauteil wickeln können. Derartige Prozessbedingungen erfordern einen Eingriff in die laufende Produktion zur Auswechselung des Werkzeugs und manuellen Spanentfernung durch den Maschinenbediener.

In diesem Zusammenhang stellt der Einsatz einer zielgerichteten Zufuhr des Kühlschmierstoffs in Form eines Strahls mit einem im Vergleich zu der Überflutungskühlung höheren Druck eine signifikante Steigerung der Produktivität und Prozesssicherheit bei der Drehbearbeitung von schwer zerspanbaren Materialien dar. Hierzu kann eine Hochdruck-Kühlschmierstoff-Zufuhr verwendet werden. Diese kann besonders vorteilhaft bei der Schruppdrehbearbeitung von schwer zerspanbaren Werkstoffen angewendet werden. Verfahrensbedingt entstehen bei der Zerspanung unter Hochdruck-Kühlschmierstoff-Zufuhr häufig kleine Späne, die durch den hohen dynamischen Druck und der daraus resultierenden Austrittsgeschwindigkeit des Kühlschmierstoffs im Arbeitsraum der Maschine umher gewirbelt werden. Dies erschwert zum einen die Säuberung der Abluft durch starke Nebel- bzw. Aerosolbildung und gefährdet die Dichtheit der Werkzeugmaschinen. Zum anderen entstehen einige Herausforderungen hinsichtlich der Prozesssicherheit durch den problematischen Abtransport der Späne, sowie den Verschleiß von Maschinenteilen. Darüber hinaus hat sich im Zusammenhang mit der Zerspanung unter Hochdruck-Kühlschmierstoff-Zufuhr herausgestellt, dass kurz gebrochene Späne vom Hochdruck-Freistrahl auf die Werkstückoberfläche beschleunigt werden können, wodurch dort unerwünschte Beeinflussungen der Oberfläche erzeugt werden, die die Lebensdauer von (sicherheitskritischen) Bauteilen negativ beeinflussen können.

Hiervon ausgehend ist es Aufgabe der vorliegenden Erfindung, die mit Bezug auf den Stand der Technik geschilderten Probleme zumindest teilweise zu lösen. Insbesondere sollen ein Verfahren und eine Anordnung zur Zufuhr eines Kühlfluids hin zu einer Bearbeitungsstelle eines metallischen Werkstücks angegeben werden, die eine möglichst hohe Produktivität und Prozesssicherheit bei der spanenden Bearbeitung von schwer zerspanbaren Materialien bei gleichwohl möglichst geringer Beeinflussung der Oberfläche des bearbeiteten Werkstücks durch herumfliegende Späne erlauben. Insbesondere soll die Bildung von ungewünscht kurz gebrochenen Spänen vermieden werden.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Zufuhr eines Kühlfluids hin zu einer Bearbeitungsstelle eines metallischen Werkstücks bei, wobei das Verfahren zumindest folgende Schritte umfasst:
a) Bereitstellen des Kühlfluids,
b) Bilden mindestens eines Spans an der Bearbeitungsstelle,
c) Zuführen des Kühlfluids zu der Bearbeitungsstelle als mindestens ein Kühlfluidstrahl, wobei der Kühlfluidstrahl mindestens eine Düse zumindest zeitweise mit einem Druck von mehr als 6 bar verlässt und wobei der Kühlfluidstrahl während des Zuführens pulsiert.

Bevorzugt wird das Verfahren mit einer hier vorgestellten Anordnung durchgeführt. Die angedeutete Reihenfolge der Verfahrensschritte a), b) und c) kann sich bei einem regulären Ablauf des Verfahrens ergeben. Einzelne oder alle Verfahrensschritte können zeitgleich, nacheinander und/oder zumindest teilweise parallel durchgeführt werden. Das Verfahren dient insbesondere zum Kühlen einer Bearbeitungsstelle eines spanend zu bearbeitenden Werkstücks.

Bei dem Kühlfluid kann es sich um einen Kühlschmierstoff handeln, insbesondere auf Basis von wassermischbaren oder nichtwassermischbaren Kühlschmierstoffen. Kühlschmierstoffe können folgenden Bestandteile umfassen: Wasser, Basisöl und/oder mindestens ein Additiv. Als Basisöl kann ein Öl mineralischer, synthetischer oder natürlicher (auf pflanzlicher Basis) Herkunft eingesetzt werden. Bevorzugt wird Wasser oder ein Gemisch umfassend Wasser als Kühlfluid verwendet. Bevorzugt wird ein Kühlfluid eingesetzt, das (im Neuzustand) keine Feststoffe enthält. Alternativ oder kumulativ kann Kohlendioxid, Stickstoff und/oder kalte Luft als Kühlfluid verwendet werden.

Bei dem metallischen Werkstück kann es sich um ein Bauteil oder Halbzeug aus einem schwer zerspanbaren Material handeln. Bevorzugt ist das Werkstück zumindest teilweise mit bzw. aus einer Titan- oder Nickelbasislegierung oder einem austenitischen und/oder rostfreien Stahl gebildet. Vorzugsweise weist das Werkstück eine Rockwell-Härte von 50 HRC oder mehr auf. Das hier vorgeschlagene Verfahren kann z. B. auch bei niedriglegierten Stählen oder Kupferlegierungen verwendet werden.

In Schritt a) wird das Kühlfluid bereitgestellt. Hierzu kann das Kühlfluid beispielsweise in einem Tank gelagert und/oder vorgehalten werden. Vorzugsweise wird das Kühlfluid mit einem Druck von mehr als 6 bar, bevorzugt von mehr als 30 bar, besonders bevorzugt mehr als 60 bar, ganz besonders bevorzugt mehr als 120 bar oder sogar mehr als 145 bar bereitgestellt. Mit steigendem Druck kann die Kühlleistung und/oder das Spanbruchverhalten positiv beeinflusst werden. In Abhängigkeit der physikalischen Werkstoffeigenschaften, den Schnittparametern sowie der Prozessführung (Verfahren, Werkzeugmakrogeometrie und Werkzeugmikrogeometrie, Beschichtung, Schneidstoff und Maschine) können unterschiedliche Druckbereiche vorteilhaft sein, die der Fachmann problemlos ermitteln kann.

Hierzu kann das Kühlfluid in einem bedruckten Tank gelagert und/oder vorgehalten werden und/oder mittels mindestens einer (Hochdruck-)Pumpe, einem Verdichter und/oder einem Kompressor bereitgestellt werden. Bevorzugt wird das Kühlfluid in einem Leitungsabschnitt zwischen einer Kühlfluidquelle und einer Reguliereinrichtung mit einem entsprechenden Druck bereitgestellt, insbesondere vorgehalten. Hierzu kann in dem Leitungsabschnitt beispielsweise ein Druckspeicher vorgesehen sein. Ebenso ist möglich, dass eine Niederdruckpumpe und eine Hochdruckpumpe so betrieben werden, dass diese gemeinsam eine Zufuhr von Kühlfluid zur Bearbeitungsstelle realisieren. Dabei kann z. B. die Niederdruckpumpe Kühlfluid mit ersten (konstanten) Förderparametern liefern und die Hochdruckpumpe (bedarfsgerecht, insbesondere getaktet) Kühlfluid mit zweiten (variierenden) Förderparametern zuführt, so dass gemeinsam ein pulsierender Strahl erzeugt wird. Es ist (alternativ oder kumulativ) möglich, dass zumindest eine erste Pumpe und eine zweite Pumpe wechselseitig eingeschaltet bzw. zu- und abgeschaltet werden. Eine (übergeordnete) Regulierungseinheit kann im Fall mehrerer Pumpen ggf. vermieden werden, z. B. wenn auf die pumpenintegrierte Steuereinheiten selbst zurückgegriffen wird.

In Schritt b) wird mindestens ein Span an der Bearbeitungsstelle des Werkstücks gebildet, insbesondere abgehoben. Hierzu kann ein spanendes bzw. spanabhebendes Bearbeitungswerkzeug (insbesondere mit definierter Schneide) dienen, wie beispielsweise ein Drehmeißel, ein Fräskopf, einen Bohrer, eine Räumstange und/oder ein Sägeblatt. Das Bearbeitungswerkzeug kann ein Teil einer Werkzeugmaschine sein, in der das Werkstück gehalten ist. Besonders bevorzugt wird der mindestens eine Span in Schritt b) mittels einer Drehbearbeitung, insbesondere Schruppdrehbearbeitung, einer Fräsbearbeitung, einer Bohrbearbeitung, einer Räumbearbeitung und/oder einer Sägebearbeitung gebildet. Es kann eine hohe Relativgeschwindigkeit von Bearbeitungswerkzeug und Werkstück realisiert werden. Der Eingriff des Bearbeitungswerkzeugs in das Werkstück hat eine hohe Wärmeerzeugung zur Folge, die mit der Zufuhr von Kühlmittel dort reduziert bzw. begrenzt werden soll. Unter einem "Span" soll insbesondere ein vom Werkstück abgetrenntes Formelement verstanden werden, welches insbesondere (auch zur Abgrenzung von eher kompakten bzw. kugeligen Partikeln) eine längliche Form hat. Zunächst kann beim Bearbeitungsvorgang ein Anstauchen stattfinden, wobei ein Keil bzw. das Bearbeitungswerkzeug in den Werkstoff dringt und das Material staucht und verfestigt. Wird der Druck aufrechterhalten, steigt die Druck- und Schubspannung im Werkstück bis zur Bruchgrenze und ein Span wird abgeschert. Das Abscheren erfolgt am Ort der maximalen Schubspannung, der sogenannten Scherebene, die mit der Werkstückoberfläche den Scherwinkel bildet. Der Span fließt nun über die Spanfläche des Schneidkeils bzw. Bearbeitungswerkzeugs ab und wird, wenn er auf weiteren Widerstand stößt, nochmals gestaucht. Die Spanform beschreibt die Form des Spans nach Verlassen des Werkzeugs. Die Entstehung der Spanform ist im Wesentlichen vom Werkstoff des Werkstücks und den Schnittbedingungen abhängig. Die einzelnen Spanformen können nach ihrer äußeren Form eingeteilt werden, wie z. B. Bandspäne, Wirrspäne, Schraubenspäne, Spiralbruchspäne und Spiralspanstücke.

In Schritt c) wird das Kühlfluid zu der Bearbeitungsstelle als mindestens ein Kühlfluidstrahl zugeführt. Bevorzugt wird der mindestens eine Kühlfluidstrahl in einen Bereich zwischen einer Freifläche eines Bearbeitungswerkzeugs und dem Werkstück eingebracht. Alternativ oder kumulativ wird der mindestens eine Kühlfluidstrahl oder mindestens ein weiterer der Kühlfluidstrahlen in einen Raum zwischen dem Span und einer (dem Span zugewandten) Spanfläche des Bearbeitungswerkzeugs eingebracht. Darüber hinaus kann der mindestens eine Kühlfluidstrahl durch das Bearbeitungswerkzeug, insbesondere durch die Spanfläche des Bearbeitungswerkzeugs hindurch zu der Bearbeitungsstelle zugeführt werden. Vorzugsweise ist der mindestens eine Kühlfluidstrahl so auf den Span gerichtet, dass mittels des Kühlfluidstrahls eine Spankrümmung und/oder ein Spanbruch beeinflusst bzw. unterstützt oder sogar herbeigeführt werden kann.

Der Kühlfluidstrahl verlässt die Düse zumindest zeitweise mit einem Druck von mehr als 6 bar. Ein entsprechend hoher Druck weist den besonderen Vorteil auf, dass eine möglichst hohe Produktivität und Prozesssicherheit bei der spanenden Bearbeitung von schwer zerspanbaren Materialien gewährleistet werden kann. Zudem ermöglicht ein entsprechend hoher Druck insbesondere, dass eine Dampfblase, die entstehen kann, wenn das Kühlfluid an der Bearbeitungsstelle verdampft und die eine Kühlwirkung an der Bearbeitungsstelle negativ beeinflussen oder sogar verhindern kann, von dem (hochenergetischen) Kühlfluidstrahl zumindest eingedrückt oder sogar durchstoßen werden kann. Eine solche Dampfblase kann insbesondere beim Zerspanen von schwer zerspanbaren Materialien entstehen, wie etwa Titan- und/oder Nickelbasislegierungen sowie rostfreien Stählen, weil bei der Zerspanung dieser Werkstoffe regelmäßig sehr hohe Zerspanungstemperaturen entstehen.

Das Verfahren zeichnet sich insbesondere dadurch aus, dass der Kühlfluidstrahl während des (gesamten) Zuführens in Schritt c) pulsiert. Dies bedeutet mit anderen Worten insbesondere, dass der Kühlfluidstrahl während einer Betriebsphase pulsiert, während der der Kühlfluidstrahl zu der Bearbeitungsstelle (kontinuierlich bzw. ununterbrochen) zugeführt wird. Unter einem Puls bzw. Pulsieren ist hier insbesondere kein einfaches Einschalten bzw. Ausschalten eines Kühlfluidstrahls am Anfang bzw. Ende einer solchen Betriebsphase oder am Anfang bzw. Ende des Zuführens zu verstehen.

Insbesondere wird der Kühlfluidstrahl während des Zuführens in Schritt c) kontinuierlich bzw. ununterbrochen der Bearbeitungsstelle zugeführt, wobei (während des Zuführens) vorzugsweise mindestens ein Zufuhrparameter diskontinuierlich ist und/oder pulsiert. Dies bedeutet mit anderen Worten insbesondere, dass der Kühlfluidstrom in Schritt c), mit mindestens einem diskontinuierlichen Zufuhrparameter, kontinuierlich (insbesondere ununterbrochen bzw. dauerhaft) der Bearbeitungsstelle zugeführt wird. Der mindestens eine Zufuhrparameter kann beispielsweise ein Kühlfluid-Volumenstrom und/oder der Druck sein, mit dem der Kühlfluidstrahl die Düse verlässt. Bevorzugt verlässt der Kühlfluidstrahl die Düse während des Zuführens in Schritt c) stets mit einem Druck von mehr als 3 bar oder sogar von mehr als 5 bar. Die angegebene Grenze dient insbesondere zur Einstellung einer Mindestkühlwirkung bzw. einer gewünschten Spanformbildung. Die ununterbrochene Zufuhr des Kühlfluids zu der Bearbeitungsstelle während Schritt c) dient insbesondere dazu, primäre Funktionen des Kühlfluids, wie Schmieren, Kühlen und Spülen trotz des Pulsierens durchgehend bzw. während des gesamten Schritt c) aufrechtzuerhalten, sodass insbesondere eine ausreichende Kühlung der Bearbeitungsstelle stets gewährleistet werden kann. Dies trägt in vorteilhafter weise zu einer Reduktion des Werkzeugverschleißes bei.

Es ist möglich, dass der Kühlfluidstrahl während des Zuführens in Schritt c) (mehrfach bzw. vielfach) unterbrochen der Bearbeitungsstelle zugeführt, wobei während des Zuführens vorzugsweise mindestens ein Zufuhrparameter diskontinuierlich ist und/oder pulsiert. Dies bedeutet mit anderen Worten insbesondere, dass der Kühlfluidstrom in Schritt c), mit mindestens einem diskontinuierlichen Zufuhrparameter, intermittierend der Bearbeitungsstelle zugeführt wird. Der mindestens eine Zufuhrparameter kann beispielsweise ein Kühlfluid-Volumenstrom und/oder der Überdruck sein, mit dem der Kühlfluidstrahl die Düse verlässt, wobei der Zuführparameter (kurzzeitig) nahezu oder vollständig den Wert "0" annimmt. Die intermittierende Zufuhr folgt dabei einer vorgegebenen Regelstrategie.

Das Pulsieren des Kühlfluidstrahl weist den besonderen Vorteil auf, dass die Bildung von ungewünscht kurz gebrochenen Spänen vermieden werden kann, wodurch eine möglichst geringe Beeinflussung der Oberfläche des bearbeiteten Werkstücks durch herumfliegende Späne erreicht werden kann. Durch das Pulsieren des Kühlfluids kann insbesondere eine Spanbildung und/oder ein Abstand zwischen aufeinanderfolgenden Spanbrüchen verlängert oder sogar (gezielt) eingestellt werden. Ebenfalls können lange Späne durch kurzfristige Einwirkung eines höheren Drucks und/oder Volumenstroms verkürzt werden, um unerwünschte Effekte wie Spanwicklung und/oder Verklemmungen zu vermeiden. Bevorzugt pulsiert der Kühlfluidstrahl derart, dass ein Spanbruch bzw. eine Spanbildung eingestellt wird. Hierzu kann mindestens ein Zufuhrparameter des Kühlfluidstrahls zum Herbeiführen eines Spanbruchs (kurzzeitig) erhöht und/oder zum Einstellen einer (bestimmten) Spanlänge (wieder) reduziert werden.

Nach einer vorteilhaften Ausgestaltung wird vorgeschlagen, dass der Kühlfluidstrahl die Düse zumindest zeitweise mit einem Druck von mehr als 30 bar, bevorzugt mehr als 60 bar, besonders bevorzugt mehr als 120 bar oder sogar mehr als 145 bar verlässt. Weiterhin bevorzugt verlässt der Kühlfluidstrahl die Düse jedoch mit einem Druck von maximal 400 bar oder sogar von maximal 300 bar. Mit steigendem Druck kann die Kühlleistung und/oder das Spanbruchverhalten positiv beeinflusst werden. In Abhängigkeit der physikalischen Werkstoffeigenschaften, den Schnittparametern sowie der Prozessführung (Verfahren, Werkzeugmakrogeometrie und Werkzeugmikrogeometrie, Beschichtung, Schneidstoff und Maschine) können unterschiedliche Druckbereiche vorteilhaft sein, die der Fachmann problemlos ermitteln kann. Insbesondere dient der Kühlfluidstrahl als solcher hier nicht zum Schneiden eines metallischen Werkstücks.

Nach einer vorteilhaften Ausgestaltung wird vorgeschlagen, dass ein Kühlfluid-Volumenstrom, insbesondere während des Zuführens in Schritt c), wiederholt variiert wird. Bevorzugt wird der Kühlfluid-Volumenstrom in bestimmten und/oder in kontinuierlichen oder diskontinuierlichen Zeitabständen variiert. Vorzugsweise wird der Kühlfluid-Volumenstrom zum Einstellen eines Spanbruchs bei der spanenden Bearbeitung eines metallischen Werkstücks variiert, insbesondere (kurzzeitig) erhöht oder reduziert. Besonders bevorzugt wird der Kühlfluid-Volumenstrom zum Herbeiführen eines Spanbruchs (kurzzeitig) erhöht und/oder zum Einstellen einer (bestimmten) Spanlänge (wieder) reduziert. Weiterhin bevorzugt wird der Kühlfluid-Volumenstrom mittels einer Reguliereinrichtung variiert.

Nach einer vorteilhaften Ausgestaltung wird vorgeschlagen, dass der Kühlfluidstrahl in einem ersten Zeitintervall einer Periodendauer (der Pulsation des Kühlfluidstrahls) mit einem (vorbestimmten) ersten Kühlfluid-Volumenstrom erzeugt wird, der größer ist als ein (vorbestimmter) zweiter Kühlfluid-Volumenstrom, mit dem der Kühlfluidstrahl in einem zweiten Zeitintervall der Periodendauer erzeugt wird. Durch die Einstellung der beiden Zeitintervalle kann die Spanbildung, wie etwa die Spanform und/oder die Spanlänge beeinflusst oder sogar eingestellt werden. Bevorzugt ist der erste Kühlfluid-Volumenstrom derart vorbestimmt und/oder dimensioniert, dass ein Spanbruch mit günstiger Spanform und/oder Spanlänge mittels des Kühlfluidstrahls herbeiführbar ist. Weiterhin bevorzugt ist der zweite Kühlfluid-Volumenstrom derart vorbestimmt und/oder dimensioniert, dass dieser zu einer (reduzierten) Strahlkraft des Kühlfluidstrahls führt, die insbesondere nicht ausreicht, um einen Spanbruch herbeizuführen. So kann, in dem zweiten Zeitintervall ein Span mit einer (bestimmten) Spanlänge gebildet und/oder eine Kühlwirkung aufrechterhalten werden. Bevorzugt wird das zweite Zeitintervall zum Erzeugen einer (vor-)bestimmten Spanlänge eingestellt. Eine Zunahme des zweiten Zeitintervalls führt hierbei regelmäßig zu einer Vergrößerung der Spanlänge. Dass der Kühlfluidstrahl in dem zweiten Zeitintervall mit dem (reduzierten) zweiten Kühlfluid-Volumenstrom erzeugt wird, trägt insbesondere dazu bei, dass auch während des zweiten Zeitintervalls primäre Funktionen des Kühlfluids, wie Schmieren, Kühlen und Spülen nicht (vollständig) entfallen. Vielmehr kann eine Kühlwirkung über die (gesamte) Periodendauer aufrechterhalten werden, bei insbesondere gleichzeitiger Ermöglichung einer vorteilhaften, insbesondere oberflächenschonenden Einstellung der Spanlänge.

Nach einer weiteren vorteilhaften Ausgestaltung wird vorgeschlagen, dass das zweite Zeitintervall größer bzw. länger ist als das erste Zeitintervall. Bevorzugt ist das zweite Zeitintervall mindestens eineinhalbmal so groß, besonders bevorzugt mindestens doppelt so groß oder sogar mindestens dreimal so groß wie das erste Zeitintervall. Bevorzugt ist auch, dass das zweite Zeitintervall nicht mehr als den Faktor 100, insbesondere nicht mehr als den Faktor 10 oder sogar nicht mehr als den Faktor 7 größer ist als das erste Zeitintervall. In diesem Rahmen sollte die Dauer des Spanbruchs (erstes Zeitintervall) möglichst kurz gewählt werden (z. B. im Bereich von 0,1 bis 0,5 Sekunden, in denen sich der Druck im System aufbaut und der Span bricht) und die Dauer des zweiten Intervalls auf eine gewünschte maximale Spanlänge angepasst sein (z. B. im Bereich von 0,1 bis 10 Sekunden).

Bevorzugt ist zumindest das erste Zeitintervall oder das zweite Zeitintervall vorbestimmt. Das zweite Zeitintervall kann beispielsweise in Abhängigkeit von einer gewünschten Spanlänge und/oder einer Schnittgeschwindigkeit (vor-)bestimmt werden. Hierbei beschreibt die Schnittgeschwindigkeit beispielsweise die Geschwindigkeit, mit der sich eine Schneidkante eines spanabhebenden Werkzeugs durch das Material des Werkstücks bewegt. Im Falle einer Drehbearbeitung kann die Schnittgeschwindigkeit im Wesentlichen von der Rotationsgeschwindigkeit der Werkstückaufnahme sowie der radialen Position der Schneidkante bestimmt sein. Besonders bevorzugt wird das zweite Zeitintervall (annähernd) proportional zu einem Quotienten aus der (zu erzielenden) Spanlänge (Zähler) und der Schnittgeschwindigkeit (Nenner) bestimmt bzw. eingestellt. So kann das zweite Zeitintervall zum Einstellen einer gewünschten und/oder bestimmten Spanlänge dienen. Bevorzugt liegt ein Verhältnis von erstem Zeitintervall zu zweitem Zeitintervall im Bereich von 0,005 bis 1,0, insbesondere im Bereich von 0,05 bis 1,0, insbesondere im Bereich von 0,4 bis 0,8. Bevorzugt ist, dass das erste Zeitintervall maximal 2 Sekunden, insbesondere maximal 1 Sekunde beträgt. Bevorzugt ist, dass das zweite Zeitintervall maximal 20 Sekunden, bevorzugt maximal 10 Sekunden, insbesondere maximal 5 Sekunden oder sogar maximal 2 Sekunden beträgt. Weiterhin bevorzugt liegt ein Verhältnis von zweitem Kühlfluid-Volumenstrom zu erstem Kühlfluid-Volumenstrom im Bereich von 0,005 bis 1,0, insbesondere im Bereich von 0,05 bis 1,0. In diesem Rahmen sollte die Dauer des Spanbruchs (erstes Zeitintervall) möglichst kurz gewählt werden (z. B. im Bereich von 0,1 bis 0,5 Sekunden, in denen sich der Druck im System aufbaut und der Span bricht) und die Dauer des zweiten Intervalls auf eine gewünschte maximale Spanlänge angepasst sein (z. B. im Bereich von 0,1 bis 10 Sekunden).

Nach einer vorteilhaften Ausgestaltung wird vorgeschlagen, dass ein Kühlfluid-Volumenstrom mittels einer (steuerbaren bzw. einstellbaren) Reguliereinrichtung vorgegeben wird, wobei die Reguliereinrichtung in einem ersten Zeitintervall in einer Öffnungsstellung und in einem zweiten Zeitintervall in einer Reduktionsstellung betrieben wird. Bevorzugt wird der Reguliereinrichtung zum Erzeugen eines pulsierenden Kühlfluidstrahls ein gepulstes Steuersignal zugeführt. Hierbei kann der Reguliereinrichtung das Steuersignal von einem Mikrocontroller einer Steuereinheit zugeführt werden, der signaltechnisch mit der Regulierungseinrichtung verbunden ist. Die Steuereinheit kann ein Teil der Anordnung oder ein Teil einer Werkzeugmaschine sein, in die die Anordnung zumindest teilweise integriert ist und/oder mit der die Anordnung zusammenwirkt. In der Öffnungsstellung kann ein (hoher oder sogar maximaler) erster Kühlfluid-Volumenstrom durch die Reguliereinrichtung und/oder durch die Düse gefördert werden. In der Reduktionsstellung kann ein (im Vergleich dazu) reduzierter zweiter Kühlfluid-Volumenstrom durch die Reguliereinrichtung und/oder durch die Düse gefördert werden.

Nach einer vorteilhaften Ausgestaltung wird vorgeschlagen, dass der Kühlfluidstrahl mit einer (Pulsations-)Frequenz von maximal 20 Hz [Hertz] pulsiert. Bevorzugt pulsiert der Kühlfluidstrahl mit einer Frequenz von maximal 5 Hz, besonders bevorzugt von maximal 2 Hz oder sogar von maximal 0,5 Hz.

Nach einem weiteren Aspekt wird eine Anordnung zur Zufuhr eines Kühlfluids hin zu einer Bearbeitungsstelle eines metallischen Werkstücks vorgeschlagen, die zumindest umfasst:
- mindestens eine Kühlfluidquelle,
- mindestens eine Düse, die mit der mindestens einen Kühlfluidquelle verbindbar und zum Austragen eines Kühlfluidstrahls mit einem Druck von mehr als 6 bar und hin zu der Bearbeitungsstelle des Werkstücks vorgesehen und eingerichtet ist,
- mindestens eine (steuerbare) Reguliereinrichtung, die (strömungstechnisch) zwischen der mindestens einen Kühlfluidquelle und der mindestens einen Düse angeordnet und dazu vorgesehen und eingerichtet ist, einen Kühlfluid-Volumenstroms derart einzustellen, dass der Kühlfluidstrahl pulsiert.

Vorzugsweise dient die Anordnung zum Ausüben eines hier vorgestellten Verfahrens. Nach einer vorteilhaften Ausgestaltung wird vorgeschlagen, dass die Anordnung zur Durchführung eines hier vorgestellten Verfahrens vorgesehen und eingerichtet ist. Die Anordnung kann zumindest teilweise in eine Werkzeugmaschine integriert sein oder als Nachrüstkomponente für eine Werkzeugmaschine dienen. Bevorzugt ist die Düse im Bereich eines Bearbeitungswerkzeugs in eine Werkzeugmaschine integriert. Besonders bevorzugt ist die Düse in einen oder an einem Werkzeughalter der Werkzeugmaschine integriert.

Die Kühlfluidquelle kann mit einem Tank gebildet sein. Bevorzugt ist die Kühlfluidquelle mit einem bedruckten Tank gebildet. Bei der Düse kann es sich beispielsweise um eine Flachstrahldüse oder eine Rundstrahldüse handeln. Bevorzugt ist die mindestens eine Düse strömungstechnisch mit der mindestens einen Kühlfluidquelle verbunden. Die Reguliereinrichtung weist vorzugsweise mindestens ein ansteuerbares Ventil auf, mittels dem der Durchfluss des Kühlfluids bzw. der Kühlfluid-Volumenstrom änderbar und/oder einstellbar ist. Bevorzugt ist mittels des Ventils der Kühlfluid-Volumenstrom durch die Düse einstellbar. Weiterhin bevorzugt ist die Reguliereinrichtung mit der Düse und der Kühlfluidquelle strömungstechnisch verbunden. Besonders bevorzugt ist die Reguliereinrichtung der Düse und/oder die Kühlfluidquelle der Reguliereinrichtung sowie der Düse strömungstechnisch vorgeordnet.

Die im Zusammenhang mit dem Verfahren erörterten Details, Merkmale und vorteilhaften Ausgestaltungen können entsprechend auch bei der hier vorgestellten Anordnung auftreten und umgekehrt. Insoweit wird auf die dortigen Ausführungen zur näheren Charakterisierung der Merkmale vollumfänglich Bezug genommen.

Nach einem weiteren Aspekt wird eine Verwendung eines pulsierenden und zumindest zeitweise mit einem Druck von mehr als 6 bar erzeugten Kühlfluidstrahls zum Einstellen eines Spanbruchs bzw. einer Spanbildung bei der spanenden Bearbeitung eines metallischen Werkstücks vorgeschlagen.

Die vorstehend im Zusammenhang mit dem Verfahren und/oder der Anordnung erörterten Details, Merkmale und vorteilhaften Ausgestaltungen können entsprechend auch bei der hier vorgestellten Verwendung auftreten und umgekehrt. Insoweit wird auf die dortigen Ausführungen zur näheren Charakterisierung der Merkmale vollumfänglich Bezug genommen.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: Anordnung zur Zufuhr eines Kühlfluids hin zu einer Bearbeitungsstelle eines metallischen Werkstücks,
- Fig. 2:: einen zeitlichen Verlauf eines Kühlfluid-Volumenstroms,
- Fig. 3:: einen zeitlichen Verlauf eines Steuersignals, und
- Fig. 4:: einen weiteren zeitlichen Verlauf eines Kühlfluid-Volumenstroms.

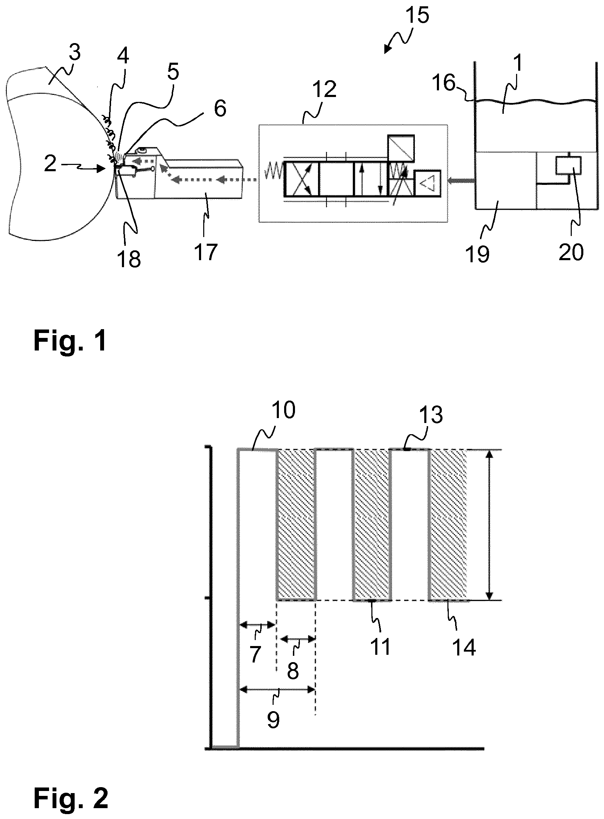

Fig. 1 zeigt schematisch eine Anordnung 15 zur Zufuhr eines Kühlfluids 1 hin zu einer Bearbeitungsstelle 2 eines metallischen Werkstücks 3. Die Anordnung 15 umfasst hier eine Kühlfluidquelle 16, die beispielhaft in Form eines Kühlfluidtanks gebildet ist, eine Düse 6 und eine Reguliereinrichtung 12. Die Düse 6 ist mit der mindestens einen Kühlfluidquelle 16 strömungstechnisch verbunden und zum Austragen eines Kühlfluidstrahls 5 mit einem Druck von mehr als 6 bar vorgesehen und eingerichtet. Zudem ist die Düse 6 hin zu der Bearbeitungsstelle 2 des Werkstücks 3 ausgerichtet. Die Anordnung 15 ist gemäß der Darstellung nach Fig. 1 teilweise in eine Werkzeugmaschine 17 integriert. Hierzu ist beispielhaft die Düse 6 im Bereich eines Bearbeitungswerkzeugs 18 in die Werkzeugmaschine 17 integriert.

Die steuerbare Reguliereinrichtung 12 ist strömungstechnisch zwischen der Kühlfluidquelle 16 und der Düse 6 angeordnet und dazu vorgesehen und eingerichtet, einen Kühlfluid-Volumenstroms derart einzustellen, dass der Kühlfluidstrahl 5 pulsiert. Hierzu ist die Reguliereinrichtung 12 in Fig. 1 beispielhaft mit einem Proportionalventil gebildet.

In Fig. 1 ist die Pulsation des Kühlfluidstrahls 5 lediglich schematisch veranschaulicht. Unter Pulsation wird hier insbesondere die zeitliche und mengenmäßige Variation des Kühlfluid-Volumenstroms verstanden. Im Gegensatz zu einer konstanten Hochdruck-Zufuhr wird bei Nutzung der Pulsation nicht dauerhaft mit maximal eingestelltem Volumenstrom und somit Druck gefördert, sondern in regelmäßigen zeitlichen Abständen der Durchfluss für eine bestimmte Dauer auf ein bestimmtes Maß reduziert. Als besonders vorteilhaft hat sich gezeigt, dass durch eine Anpassung der Pulsationsfrequenz an die Zerspanparameter die Länge des erzeugten Spans 4 gezielt eingestellt werden kann. Die entstehenden Wendelspäne werden seitlich des an die Schneidkante fokussierten Kühlfluidstrahls 5 von der Zerspanstelle abgeführt ohne die Werkstückoberfläche zu beschädigen. Bei gleichzeitig reduziertem Kühlfluid- sowie Energieverbrauch pro Zeiteinheit kann die Bildung von Oberflächenschädigungen somit vorteilhaft vermieden werden.

Gemäß der Darstellung nach Fig. 1 wird das Kühlfluid 1 unter Zuhilfenahme einer Pumpe 19 durch einen Filter 20 aus einem die Kühlfluidquelle 16 darstellenden Tank heraus und durch eine Zuleitung (hier nicht dargestellt) hin zu der Düse 6 gefördert. In der Zuleitung ist zwischen der Düse 6 und der Pumpe 19 die beispielhaft mit einem Proportionalventil gebildete Reguliereinrichtung 12 zur Regulierung der zeitlichen und mengenmäßigen Zufuhr des Kühlfluid-Stroms eingebaut. Mit Hilfe eines Mikrocontrollers (hier nicht dargestellt) kann sowohl die Durchlassöffnung als auch die Anzahl der Schließstellungen des Ventils eingestellt werden. Die Größe der Durchlassöffnung bestimmt beispielsweise den einzustellenden Volumenstrom, während dessen die Anzahl der Schließstellungen des Ventils die Frequenz der Pulsation bestimmt. Durch die Ausrichtung der Düse 6 und die Fokussierung wird der pulsierende Kühlfluidstrahl präzise auf die gewünschte Stelle geleitet. Hierbei ist der Kühlfluid-Volumenstrom beispielsweise vom Druck, Düsendurchmesser, den hydraulischen Widerständen in der Leitung und von der eingestellten Pulsationsfrequenz abhängig.

Fig. 2 zeigt schematisch einen zeitlichen Verlauf eines Kühlfluid-Volumenstroms. Der gezeigte Verlauf des Kühlfluid-Volumenstroms dient hier zum Erzeugen eines pulsierenden Kühlfluidstrahls (hier nicht dargestellt). Der Kühlfluidstrahl wird in einem ersten Zeitintervall 7 einer Periodendauer 9 mit einem ersten Kühlfluid-Volumenstrom 10 erzeugt. In einem zweiten Zeitintervall 8 der Periodendauer 9 wird der Kühlfluidstrahl mit einem zweiten Kühlfluid-Volumenstrom 11 erzeugt. Hierbei ist der erste Kühlfluid-Volumenstrom 10 größer als der zweite Kühlfluid-Volumenstrom 11. Der in Fig. 2 gezeigte Kühlfluid-Volumenstrom kann mittels einer Reguliereinrichtung (hier nicht dargestellt) eingestellt werden. Hierzu wird die Reguliereinrichtung in dem ersten Zeitintervall 7 in einer Öffnungsstellung 13 und in dem zweiten Zeitintervall 8 in einer Reduktionsstellung 14 betrieben.

In der Öffnungsstellung 13 wird der volle Volumenstrom für eine bestimmte Zeit, nämlich während des ersten Zeitintervalls 7, gefördert, wobei in der Reduktionsstellung 14 während des zweiten Zeitintervalls 8 eine im Vergleich dazu reduzierte Menge an Kühlfluid gefördert wird. Hierzu wird die Reguliereinrichtung bzw. ein Ventil der Reguliereinrichtung während des ersten Zeitintervalls 7 vollständig geöffnet und somit die maximale durch die Pumpe bereitgestellte Durchflussmenge zu der Düse befördert. Nach Verstreichen des ersten Zeitintervalls 7 wird die Reguliereinrichtung bzw. eine Ventilstellung während des zweiten Zeitintervalls 8 so eingestellt, dass hier beispielhaft eine um 13 L/min [Liter pro Minute] verringerte Durchflussmenge durch die Reguliereinrichtung fließt, wodurch der Kühlfluidstrahl während des zweiten Zeitintervalls 8 mit einem entsprechend reduzierten Kühlfluid-Volumenstrom erzeugt wird.

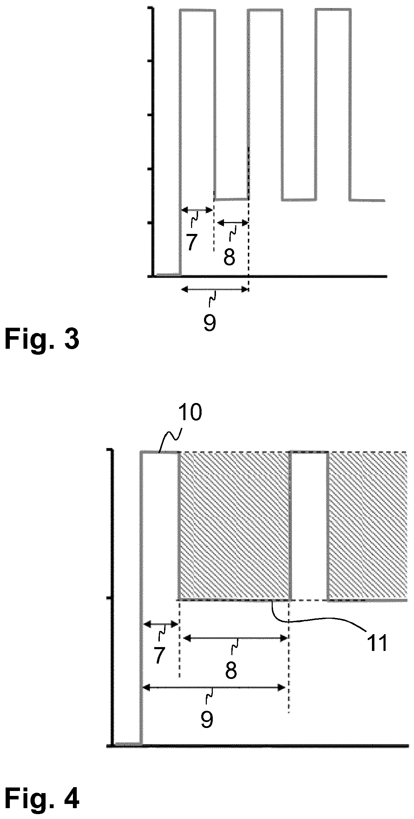

Fig. 3 zeigt schematisch einen zeitlichen Verlauf eines Steuersignals mit dem die Reguliereinrichtung zum Einstellen des in Fig. 2 gezeigten zeitlichen Verlaufs des Kühlfluid-Volumenstroms angesteuert werden kann. Das Signal weist hier beispielhaft die Form eines Rechtecksignals auf und ist proportional zu der Durchflussmenge durch die Reguliereinrichtung. Das Signal zur Steuerung der Reguliereinrichtung kann grundsätzlich jedoch beliebige Formen annehmen.

Durch eine Modifizierung des Steuersignals können das erste Zeitintervall 7 und das zweite Zeitintervall 8 der Periode 9 der gewünschten Spanlänge und Spanform angepasst werden. Hierbei stellt das erste Zeitintervall 7 die Zeitspanne dar, innerhalb derer ein großer oder sogar maximaler Kühlfluid-Volumenstrom gefördert wird, der zum Erzeugen eines hochdynamischen Kühlfluidstrahls führt, der thermo-mechanisch derart auf einen Span wirkt, dass ein Spanbruch herbeigeführt werden kann. Während des zweiten Zeitintervalls 8 wird die Durchflussmenge durch die Reguliereinrichtung und somit der geförderte Kühlfluid-Volumenstrom deutlich reduziert. Mit der Reduzierung des Kühlfluid-Volumenstroms geht nach hydraulischen Zusammenhängen eine Reduzierung der Strahlkraft des Kühlfluidstrahls, die auf den Span einwirkt, einher. Der sich bildende Span wird durch die nun reduzierte Strahlkraft nicht mehr gebrochen. Eine komplette Deaktivierung des Kühlfluidstroms während des zweiten Zeitintervalls 8 ist zwar möglich, bevorzugt wird der Kühlfluidstrahl jedoch während der gesamten spanenden Bearbeitung ununterbrochen der Bearbeitungsstelle zugeführt, da bei vielen Materialien der Kühleffekt des Kühlfluidstrahls weitere positive Effekte wie verringerten Verschleiß oder verringerte Reibung verursacht. Durch die kontinuierliche Versorgung der Zerspanstelle mit ausreichender Menge Kühlfluid wird die Kühlwirkung des Kühlfluids aufrechterhalten.

Fig. 4 zeigt schematisch einen weiteren zeitlichen Verlauf eines Kühlfluid-Volumenstroms. Hierbei wurde das die Reguliereinrichtung ansteuernde Steuersignal derart modifiziert, dass das zweite Zeitintervall 8 größer ist als das erste Zeitintervall 7 der Periode 9 der Pulsation des Kühlfluidstrahls. Während dem ersten Zeitintervall 7 wird der Kühlfluidstrahl mit dem ersten Kühlfluid-Volumenstrom und während dem zweiten Zeitintervall 8 mit dem zweiten Kühlfluid-Volumenstrom erzeugt. Das erste Zeitintervall 7 ist hier möglichst kurz, sodass gerade der gebildete Span bricht. Das zweite Zeitintervall 8 dient zum Einstellen der Spanlänge und ist hier derart lang, dass die Bildung von (zu) kurz gebrochenen Spänen möglichst vermieden wird. Zudem führt eine Zunahme des zweiten Zeitintervalls 8 zu einem insgesamt ressourcenschonenderen Betrieb.

Es werden hier ein Verfahren sowie eine Anordnung zur Zufuhr eines Kühlfluids hin zu einer Bearbeitungsstelle eines metallischen Werkstücks angegeben, die die mit Bezug auf den Stand der Technik geschilderten Probleme zumindest teilweise lösen. Insbesondere ermöglichen das Verfahren sowie die Anordnung eine möglichst hohe Produktivität und Prozesssicherheit bei der spanenden Bearbeitung von schwer zerspanbaren Materialien, bei gleichwohl möglichst geringer Beeinflussung der Oberfläche des bearbeiteten Werkstücks durch herumfliegende Späne. Zudem kann mittels dem Verfahren und der Anordnung die Bildung von ungewünscht kurz gebrochenen Spänen vermieden werden.

### Bezugszeichenliste

- 1: Kühlfluid
- 2: Bearbeitungsstelle
- 3: Werkstück
- 4: Span
- 5: Kühlfluidstrahl
- 6: Düse
- 7: erstes Zeitintervall
- 8: zweites Zeitintervall
- 9: Periodendauer
- 10: erster Kühlfluid-Volumenstrom
- 11: zweiter Kühlfluid-Volumenstrom
- 12: Reguliereinrichtung
- 13: Öffnungsstellung
- 14: Reduktionsstellung
- 15: Anordnung
- 16: Kühlfluidquelle
- 17: Werkzeugmaschine
- 18: Bearbeitungswerkzeug
- 19: Pumpe
- 20: Filter

## Patentansprüche

1. Verfahren zur Zufuhr eines Kühlfluids (1) hin zu einer Bearbeitungsstelle (2) eines metallischen Werkstücks (3) mit zumindest folgenden Schritten:
a) Bereitstellen des Kühlfluids (1),
b) Bilden mindestens eines Spans (4) an der Bearbeitungsstelle (2),
c) Zuführen des Kühlfluids (1) zu der Bearbeitungsstelle (2) als mindestens ein Kühlfluidstrahl (5), wobei der Kühlfluidstrahl (5) mindestens eine Düse (6) zumindest zeitweise mit einem Druck von mehr als 6 bar verlässt und wobei der Kühlfluidstrahl (5) während des Zuführens pulsiert.

2. Verfahren nach Anspruch 1, wobei der Kühlfluidstrahl (5) während des Zuführens in Schritt c) ununterbrochen der Bearbeitungsstelle (2) zugeführt wird.

3. Verfahren nach Anspruch 1 oder 2, wobei der Kühlfluidstrahl (5) während des Zuführens in Schritt c) kontinuierlich der Bearbeitungsstelle (2) zugeführt wird, wobei währenddessen mindestens ein Zufuhrparameter diskontinuierlich ist.

4. Verfahren nach einem der vorhergehenden Ansprüche, wobei der Kühlfluidstrahl (5) derart pulsiert, dass eine Spanbildung und/oder ein Abstand zwischen aufeinanderfolgenden Spanbrüchen gezielt eingestellt wird.

5. Verfahren nach Anspruch 4, wobei mindestens ein Zufuhrparameter des Kühlfluidstrahls (5) zum Herbeiführen eines Spanbruchs erhöht und/oder zum Einstellen einer Spanlänge reduziert wird.

6. Verfahren nach einem der vorhergehenden Ansprüche, wobei der Kühlfluidstrahl (5) die Düse (6) zumindest zeitweise mit einem Druck von mehr als 30 bar verlässt.

7. Verfahren nach einem der vorhergehenden Ansprüche, wobei ein Kühlfluid-Volumenstrom wiederholt variiert wird.

8. Verfahren nach einem der vorhergehenden Ansprüche, wobei der Kühlfluidstrahl (5) in einem ersten Zeitintervall (7) einer Periodendauer (9) mit einem ersten Kühlfluid-Volumenstrom (10) erzeugt wird, der größer ist als ein zweiter Kühlfluid-Volumenstrom (11), mit dem der Kühlfluidstrahl (5) in einem zweiten Zeitintervall (8) der Periodendauer (9) erzeugt wird.

9. Verfahren nach Anspruch 8, wobei der zweite Kühlfluid-Volumenstrom (11) derart dimensioniert ist, dass dieser zu einer reduzierten Strahlkraft des Kühlfluidstrahls (5) führt, sodass in dem zweiten Zeitintervall (8) ein Span (4) mit einer Spanlänge gebildet und eine Kühlwirkung aufrechterhalten wird.

10. Verfahren nach Anspruch 8 oder 9, wobei das zweite Zeitintervall (8) größer ist als das erste Zeitintervall (7).

11. Verfahren nach einem der vorhergehenden Ansprüche, wobei ein Kühlfluid-Volumenstrom mittels einer Reguliereinrichtung (12) eingestellt wird, wobei die Reguliereinrichtung (12) in einem ersten Zeitintervall (7) in einer Öffnungsstellung (13) und in einem zweiten Zeitintervall (8) in einer Reduktionsstellung (14) betrieben wird.

12. Verfahren nach einem der vorhergehenden Ansprüche, wobei der Kühlfluidstrahl (5) mit einer Frequenz von maximal 20 Hz pulsiert.

13. Anordnung (15) zur Zufuhr eines Kühlfluids (1) hin zu einer Bearbeitungsstelle (2) eines metallischen Werkstücks (3), zumindest umfassend:
- mindestens eine Kühlfluidquelle (16),
- mindestens eine Düse (6), die mit der mindestens einen Kühlfluidquelle (16) verbindbar und zum Austragen eines Kühlfluidstrahls (5) mit einem Druck von mehr als 6 bar und hin zu der Bearbeitungsstelle (2) des Werkstücks (3) vorgesehen und eingerichtet ist,
- mindestens eine Reguliereinrichtung (12), die zwischen der mindestens einen Kühlfluidquelle (16) und der mindestens einen Düse (6) angeordnet und dazu vorgesehen und eingerichtet ist, einen Kühlfluid-Volumenstroms derart einzustellen, dass der Kühlfluidstrahl (5) pulsiert.

14. Anordnung nach Anspruch 13, wobei die Anordnung (15) zur Durchführung eines Verfahrens nach einem der Ansprüche 1 bis 12 vorgesehen und eingerichtet ist.

15. Verwendung eines pulsierenden und zumindest zeitweise mit einem Druck von mehr als 6 bar erzeugten Kühlfluidstrahls (5) zum Einstellen eines Spanbruchs bei der spanenden Bearbeitung eines metallischen Werkstücks (3).
